# FASCICULE DE BREVET EUROPEEN

(11) **EP 3 767 194 B1**
(45) Date de publication et mention de la délivrance du brevet: **29.11.2023**
(21) Numéro de dépôt: 20186596.1
(22) Date de dépôt: 17.07.2020
(51) Int. Cl.: F24F 13/06, F24F 13/10, F24F 13/14, F24F 13/20, F24F 7/06, F24F 13/02, F24F 3/044

(54) **ORGANE DE REGULATION DE FLUX D'AIR**
LUFTSTROMREGULIERUNGSORGAN
AIR FLOW CONTROL MEMBER

(30) Priorité: 18.07.2019 FR 1908142
(43) Date de publication de la demande: 20.01.2021
(73) Titulaire: Atlantic Climatisation et Traitement d'Air Industrie, 69330 Meyzieu (FR)
(72) Inventeur: HUSCENOT, Jeremie, 69740 GENAS (FR); MEASSON, Mathieu, 69780 MIONS (FR)
(74) Mandataire: Plasseraud IP

(56) Documents cités:
- EP-A1- 3 581 857
- FR-A1- 2 855 251
- FR-A1- 3 082 287
- JP-U- S5 876 411

## Description

### Domaine technique

L'invention se rapporte à un organe de régulation de flux d'air pour un système de ventilation, chauffage et/ou climatisation d'un local, notamment un local du secteur tertiaire.

### Technique antérieure

Un organe de régulation de flux d'air comporte classiquement un caisson muni d'une première entrée d'un premier flux d'air, une deuxième entrée d'un deuxième flux d'air et une pluralité de sorties desdits flux d'air, lesdits premier et deuxième flux d'air circulant dans le caisson entre les entrées et la pluralité de sorties.

Par exemple, le premier flux d'air est un flux d'air à température contrôlée, c'est-à-dire issu d'un traitement thermique de l'air par un dispositif de traitement thermique de l'air, comprenant au moins un échangeur de chaleur. Par exemple, le deuxième flux d'air est un flux d'air, dit neuf, issu d'un dispositif de ventilation d'air comprenant au moins un ventilateur de mise en mouvement de l'air neuf.

EP 3581857 A1, qui est compris dans l'état de la technique selon l'article 54(3) CBE, divulgue un dispositif de distribution d'air dans l'espace intérieur d'une construction. Plus précisément, ce document divulgue un organe de régulation de flux d'air pour un système de ventilation, chauffage et/ou climatisation de plusieurs zones d'un local, le système comprenant un dispositif de traitement d'un flux d'air issu du local configuré pour traiter thermiquement ledit flux d'air issu du local, le système comprenant en outre un dispositif de ventilation, l'organe comportant un caisson comprenant :
- une entrée adaptée pour recevoir un flux d'air depuis le dispositif de traitement thermique, dite entrée d'air recyclé,
- une entrée adaptée pour recevoir un flux d'air, dit neuf, depuis le dispositif de ventilation, dite entrée d'air neuf,
- une pluralité d'embouchures adaptées pour être chacune connectée à une gaine respective du système pour amener un flux d'air dans une zone respective du local, chaque embouchure comprenant une première portion reliée fluidiquement à l'entrée d'air recyclé et formant une sortie de flux d'air dite à température contrôlée, et une deuxième portion reliée fluidiquement à l'entrée de flux d'air neuf et formant une sortie de flux d'air neuf, l'organe comportant en outre, pour chacune des embouchures, un premier dispositif de régulation du débit de flux d'air dans la sortie de flux d'air à température contrôlée, et un deuxième dispositif de régulation du débit de flux d'air dans la sortie de flux d'air neuf. FR 2855251 A1 divulgue un dispositif de répartition de débit pour ventilation mécanique contrôlée. JP S5876411 U divulgue un système de climatisation.

Le but de l'invention est de proposer un organe de régulation optimisé.

### Résumé

À cet effet, l'invention a pour objet un organe de régulation de flux d'air pour un système de ventilation, chauffage et/ou climatisation de plusieurs zones d'un local, le système comprenant un dispositif de traitement d'un flux d'air issu du local configuré pour traiter thermiquement ledit flux d'air issu du local, le système comprenant en outre un dispositif de ventilation, l'organe comportant un caisson comprenant une entrée adaptée pour recevoir un flux d'air depuis le dispositif de traitement thermique, dite entrée d'air recyclé, une entrée adaptée pour recevoir un flux d'air, dit neuf, depuis le dispositif de ventilation, dite entrée d'air neuf, une pluralité d'embouchures adaptées pour être chacune connectées à une gaine respective du système pour amener un flux d'air dans une zone respective du local, chaque embouchure comprenant une première portion reliée fluidiquement à l'entrée d'air recyclé et formant une sortie de flux d'air dite à température contrôlée, une deuxième portion reliée fluidiquement à l'entrée de flux d'air neuf et formant une sortie de flux d'air neuf, l'organe comportant en outre, pour chacune des embouchures, un premier dispositif de régulation du débit de flux d'air dans la sortie de flux d'air à température contrôlée, et également un deuxième dispositif de régulation du débit de flux d'air dans la sortie de flux d'air neuf. Le premier dispositif de régulation et le deuxième dispositif de régulation sont des volets montés pivotants autour d'axes de rotation sécants.

Grâce à l'organe selon la présente invention, il est possible de gérer le débit d'apport de flux d'air neuf par zone, par exemple dans un bâtiment utilisé dans le secteur économique tertiaire, en amont même des gaines du système. Un tel organe est en outre particulièrement avantageux en ce qu'il permet de centraliser la répartition de débit de flux d'air neuf.

Le dispositif de ventilation comprend au moins un ventilateur.

Selon une autre caractéristique de l'invention, le premier dispositif de régulation est un volet monté mobile entre une position d'ouverture complète de la sortie de flux d'air à température contrôlée et une position d'obturation complète de la sortie de flux d'air à température contrôlée. Le volet est monté pivotant.

Selon une autre caractéristique de l'invention, le deuxième dispositif de régulation est un volet monté mobile entre une position d'ouverture complète de la sortie de flux d'air neuf et une position d'obturation complète de la sortie de flux d'air neuf. Le volet est monté pivotant.

Selon une autre caractéristique de l'invention, le volet de la sortie de flux d'air à température contrôlée et le volet de la sortie de flux d'air neuf sont montés pivotants autour d'axes perpendiculaires.

Selon une autre caractéristique de l'invention, l'axe de rotation du volet de la sortie de flux d'air à température contrôlée est vertical et l'axe de rotation du volet de la sortie de flux d'air neuf est horizontal dans une position de fonctionnement de l'organe dans le système.

Selon une autre caractéristique de l'invention, l'organe comporte pour au moins l'une des embouchures, un membre de réglage du deuxième dispositif de régulation du débit de flux d'air dans la sortie d'air neuf, le membre de réglage étant actionnable depuis l'extérieur de l'organe.

Selon une autre caractéristique de l'invention, l'organe comporte, pour au moins l'une des embouchures, une languette d'entrainement du volet de flux d'air neuf. Selon une caractéristique de l'invention, le membre de réglage actionnable depuis l'extérieur de l'organe est la languette d'entrainement.

Selon une autre caractéristique de l'invention, l'organe comprend un conduit formant l'entrée de flux d'air neuf et agencé de façon amovible au caisson, de préférence sur une plaque amoviblement fixée au caisson.

Selon une autre caractéristique de l'invention, l'organe comprend en outre un moyen de déflection du flux d'air à température contrôlée agencé pour répartir de façon sensiblement homogène le débit de flux d'air à température contrôlée sur chacune des sorties.

L'invention fournit également un système de ventilation, chauffage et/ou climatisation de plusieurs zones d'un local, comportant :
- un organe tel que décrit précédemment,
- un dispositif (4) d'amenée d'air issu du local (2) connecté à l'entrée de flux d'air à température contrôlée (32) de l'organe de régulation (6), le dispositif étant de traitement thermique de flux d'air,
- un dispositif de ventilation de flux d'air neuf connecté à l'entrée de flux d'air neuf de l'organe de régulation,
- une pluralité de gaines, les gaines étant connectées chacune par une première extrémité respective à une embouchure respective de l'organe de régulation, les gaines étant en outre connectées par une seconde extrémité respective à une bouche de soufflage respective disposée dans une zone respective du local.

### Brève description des dessins

D'autres détails et avantages de l'invention apparaîtront encore à la lecture de la description qui va suivre. Celle-ci est purement illustrative et doit être lue en regard des dessins annexés sur lesquels :
**Fig. 1**

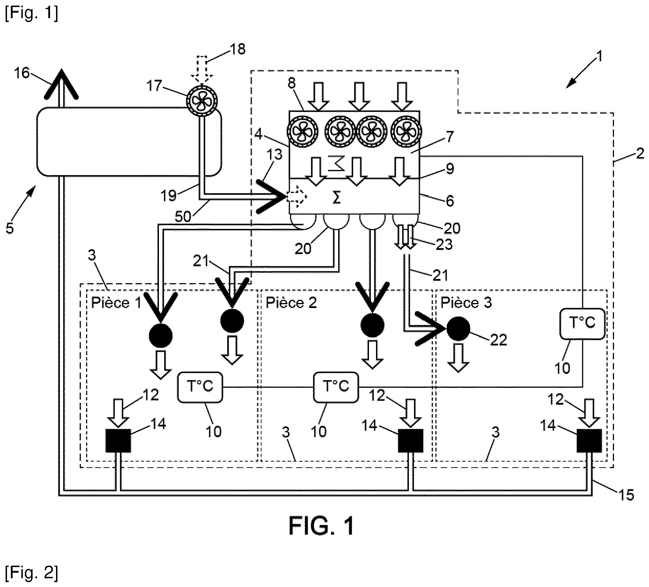

   [Fig. 1] illustre schématiquement un système de ventilation, chauffage et/ou climatisation d'un local, comprenant un organe de régulation de flux d'air selon un mode de réalisation de la présente invention;
**Fig. 2**

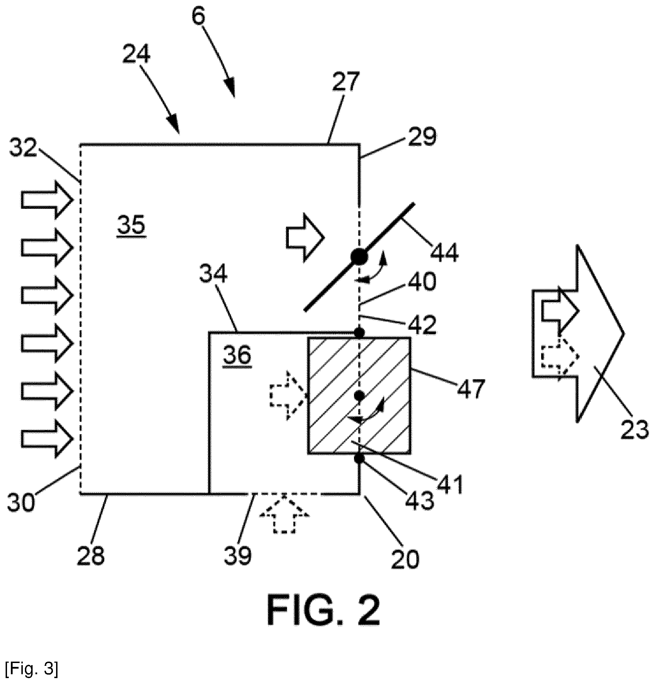

   [Fig. 2] illustre une vue schématique fonctionnelle en coupe transversale d'un organe de régulation de flux d'air du système de la figure 1 ;
**Fig. 3**

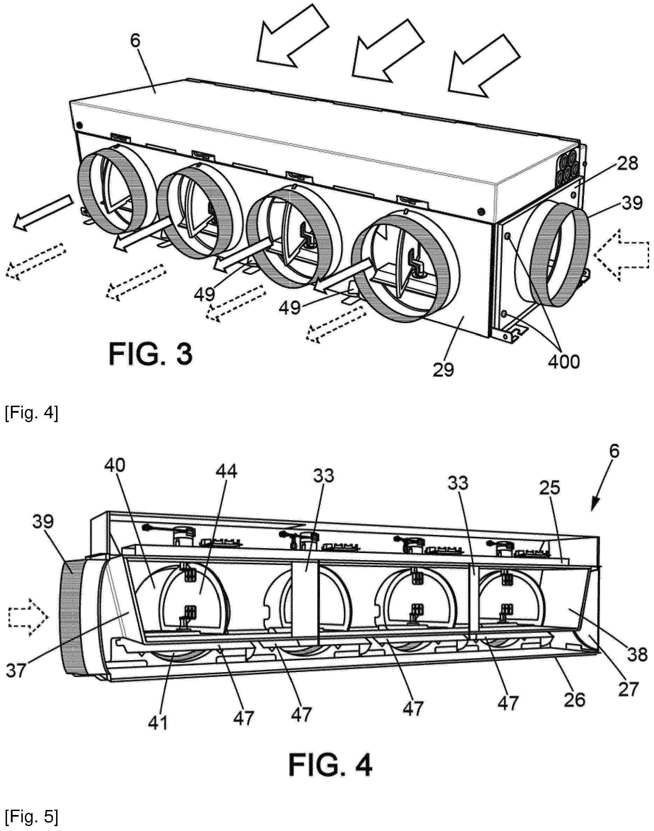

   [Fig. 3] illustre une vue en perspective de l'organe de régulation de flux d'air de la figure 2, tourné vers la face avant de l'organe;
**Fig. 4**
   [Fig. 4] illustre une vue en perspective partielle de l'organe de régulation de flux d'air de la figure 3;
**Fig. 5**

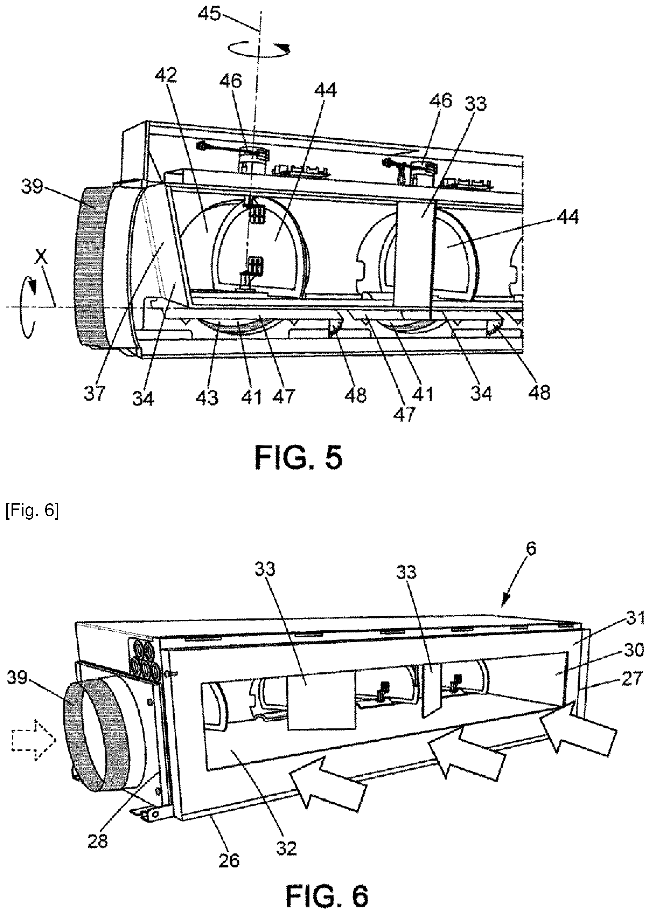

   [Fig. 5] est une vue agrandie d'un détail de la figure 4;
**Fig. 6**
   [Fig. 6] illustre une vue en perspective de l'organe de régulation de flux d'air de la figure 3, tourné vers la face arrière de l'organe;
**Fig. 7**

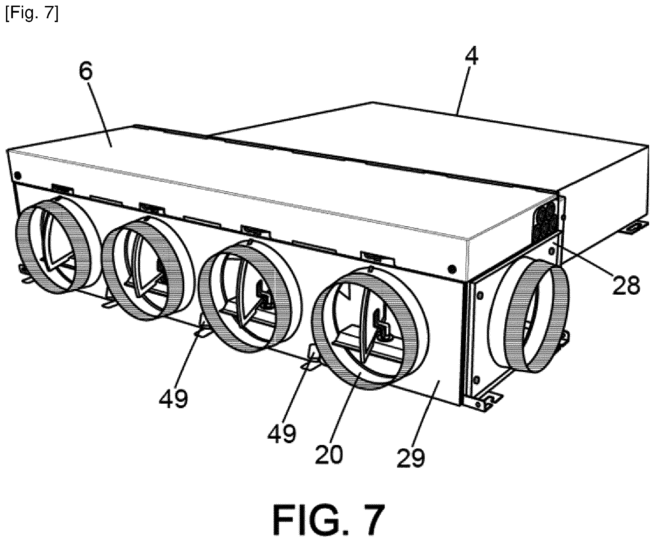

   [Fig. 7] illustre une vue en perspective de l'organe de régulation de flux d'air de la figure 3, monté sur un système de traitement thermique.

### Description des modes de réalisation

Un système 1 de ventilation, chauffage et/ou climatisation d'un local 2 est représenté sur la figure 1.

Le local 2 comporte plusieurs zones 3. Le local 2 appartient à un bâtiment utilisé par exemple dans le secteur économique tertiaire ; par exemple les zones 3 sont des bureaux. Par la suite, on appellera « extérieur » l'extérieur du bâtiment. Sur la figure 1, les différentes zones 3 sont séparées par des murs, mais le système est également adapté pour des zones délimitées sans cloisons fixes soit à l'intérieur d'un local soit à l'intérieur d'une pièce du local, par exemple pour un espace de travail ouvert encore appelé en anglais « open space ».

L'air de chacune des zones 3 doit être renouvelé pour des raisons sanitaires et/ ou réglementaires. En outre, l'air de chacune des zones 3 doit être mis à température, pour des raisons de confort et/ou réglementaires.

Le système 1 permet que les zones 3 bénéficient chacune de ventilation, chauffage et/ou climatisation. Notamment, le système 1 comporte un dispositif de traitement thermique de l'air 4 et un dispositif de ventilation 5, les deux dispositifs étant reliés fluidiquement à un organe de régulation de flux d'air 6. Alternativement, le dispositif de traitement thermique de l'air 4 peut être complété et/ou remplacé par un dispositif de traitement de purification de l'air. Le traitement de purification de l'air est par exemple un traitement physico-chimique de l'air. Par purification, on entend qu'on débarrasse l'air d'impuretés, telles que des microbes, virus, bactéries, insectes, micro-organismes, matière particulaire, composés organiques volatiles, molécules de gaz polluantes,... Par traitement physico-chimique, on entend par exemple filtration mécanique, adsorption, ionisation et captation, filtration électrostatique, ozonisation, le plasma, la photocatalyse, la biofiltration, l'utilisation d'un produit désinfectant, d'un rayonnement, ...

En d'autres termes, un fluide, ici de l'air, peut circuler entre le dispositif de ventilation 5, et le dispositif de traitement thermique 4 d'une part, et l'organe de régulation 6 d'autre part.

Le dispositif de traitement thermique de l'air 4 comporte un caisson, dit caisson thermique, référencé 7 et présentant avantageusement une forme de parallélépipède rectangle.

Une des faces du caisson thermique 7 est ouverte de sorte à constituer une bouche d'aspiration 8. La bouche d'aspiration 8 est équipée d'un moyen d'aspiration, apte à aspirer un flux d'air du local 2. La bouche d'aspiration 8 est disposée à l'intérieur du local 2, de sorte que le flux d'air aspiré est originaire d'une ou plusieurs zones du local. Par exemple, le moyen d'aspiration comprend des ventilateurs pour aspirer le flux d'air, comme représenté sur la figure 1.

Ainsi, l'air circulant dans le caisson 7 depuis la bouche d'aspiration 8 est un air issu du local 2, autrement dit recyclé.

Avantageusement, le caisson thermique 7 comporte en outre au moins un échangeur de chaleur apte à modifier la température du flux d'air aspiré de sorte à générer des flux d'air à température contrôlée. Par exemple, l'échangeur de chaleur peut être un évaporateur, ou un condenseur. La face du caisson thermique 7 qui est parallèle à la bouche d'aspiration 8 est également ouverte de sorte à constituer une sortie thermique 9 par laquelle s'écoulent les flux d'air à température contrôlée. La sortie thermique 9 est reliée fluidiquement à l'organe de régulation de flux d'air 6.

Selon une autre variante, le caisson thermique 7 est dépourvu d'échangeur de chaleur, de sorte que l'air issu de la sortie 9 est simplement l'air recyclé introduit dans le caisson 7 via la bouche d'aspiration 8.

Selon une autre variante, le caisson thermique 7 étant équipé d'au moins un échangeur de chaleur et d'un moyen de dérivation d'air, l'air issu de la sortie 9 peut être un mélange entre un flux d'air passant par l'échangeur de chaleur et un flux d'air qui évite l'échangeur.

Par la suite, on parlera indifféremment d'air recyclé ou d'air à température contrôlée.

La liaison fluidique entre la sortie thermique 9 et l'organe de régulation de flux d'air 6 sera décrite plus en détail ultérieurement.

Avantageusement, un système de contrôle thermique (non représenté) est connecté au dispositif de traitement thermique de l'air 4. Le système de contrôle thermique comporte au moins un capteur de température 10 installé dans chaque zone. Le système de contrôle thermique comporte en outre un boîtier de contrôle électronique de l'appareil thermodynamique, et une connexion électronique 11 connectant électroniquement le boîtier de contrôle et les capteurs de température 10 de chaque zone 3. Cette connexion pouvant être filaire ou non selon les modes de réalisation.

Le dispositif de ventilation 5 comporte un réseau de ventilation apte à aspirer des flux d'air viciés 12 depuis les zones 3 du local 2 pour les extraire du local 2 vers l'extérieur. Le dispositif de ventilation 5 est en outre apte à aspirer des flux d'air neuf depuis l'extérieur pour les transmettre à l'intérieur du local via l'organe de régulation 6.

Pour cela, le réseau de ventilation comporte une pluralité de bouches de reprise 14 apte à aspirer des flux d'air viciés 12, chacune étant disposée dans une des zones 3 du local 2. Chaque bouche de reprise 14 est reliée fluidiquement au dispositif d'assainissement de l'air par l'intermédiaire d'un réseau de gaines 15, de sorte à pouvoir extraire les flux d'air viciés.

Le dispositif de ventilation 5 comporte une bouche d'aspiration équipée d'un système d'aspiration 17, apte à aspirer un flux d'air neuf 18 de sorte à insuffler dans le local 2 un volume d'air neuf. Le système d'aspiration 17 peut comprendre un ventilateur et/ou un modulateur de débit de flux d'air afin d'aspirer le flux d'air. Ce flux d'air neuf 18 provient de l'extérieur du bâtiment. Le flux d'air neuf 18 peut optionnellement être en outre filtré par le dispositif de ventilation 5.

Le volume d'air neuf peut être considéré fixe, auquel cas le débit d'air neuf est appelé « débit fixe ». En variante, le volume d'air neuf peut être au contraire variable, auquel cas le débit d'air neuf est appelé « débit variable ». Le dispositif de ventilation 5 peut comporter tout type de machine permettant de réaliser cette fonction d'aspiration d'air neuf depuis l'extérieur et de rejet d'air vicié vers l'extérieur. Par exemple, des machines dites « simple flux » peuvent convenir. Dans un autre exemple, des machines dites « double flux » peuvent également convenir.

Le dispositif de ventilation 5 comporte également une sortie d'air neuf 19 reliée fluidiquement à l'organe de régulation de flux d'air 6 de sorte à acheminer un flux d'air neuf à l'organe de régulation de flux d'air 6.

Le système est conçu de sorte que la température d'air ambiant soit réglable pour chacune des zones 3, indépendamment des autres zones 3.

Comme visible sur la figure 1, l'organe de régulation de flux d'air 6 comporte une pluralité d'embouchures 20 décrites plus en détail ultérieurement. Chaque embouchure 20 est connectée à une gaine 21 pour relier fluidiquement l'organe de régulation de flux d'air 6 à l'une des zones 3 via une bouche de soufflage 22, comme on le voit sur la figure 1. Ainsi, l'organe de régulation de flux d'air 6 est apte à transmettre à chaque zone un mélange des flux d'airs 23 issus du dispositif de traitement thermique de l'air 4 et du dispositif de ventilation 5.

La répartition du mélange des flux d'air 23, notamment le débit de flux d'air à température contrôlée, et le débit de flux d'air neuf est contrôlable zone 3 par zone 3, comme il sera décrit plus en détail ultérieurement.

Les figures 2 à 7 représentent l'organe de régulation de flux d'air 6 pour répartir le mélange des flux d'air neuf et à température contrôlée zone par zone. Pour des raisons de simplicité de l'illustration, et contrairement aux figures 3 à 7, la figure 2 ne représente pas une vue de l'organe 6 mais un schéma purement fonctionnel de ce dernier.

Dans l'exemple du système de ventilation, chauffage et/ou climatisation d'un local représenté sur la figure 1, l'organe de régulation de flux d'air 6 est installé en faux plafond. Aussi, il sera fait référence aux directions verticales et horizontales par la suite pour décrire les emplacements relatifs des éléments composant l'organe de régulation de flux d'air 6 en référence aux figures 2 à 7. L'homme du métier comprendra que ces directions sont relatives entre elles, et font référence aux directions de l'espace dans une position d'utilisation de l'organe de régulation de flux d'air 6 en faux plafond. L'homme du métier saura adapter la description dans le cas où l'organe de régulation de flux d'air 6 est utilisé dans une autre position d'utilisation, par exemple perpendiculaire à l'utilisation en faux-plafond, par exemple dans une position d'utilisation dans laquelle l'organe est fixé au mur.

Comme visible sur les figures 2 à 7, l'organe de régulation de flux d'air 6 comporte un caisson 24 présentant avantageusement une forme générale de parallélépipède rectangle.

Le caisson présente ainsi six faces parallèles deux à deux :
- une face supérieure 25 formant le plafond horizontal du caisson et une face inférieure 26 formant le plancher horizontal du caisson,
- deux petites faces latérales verticales 27 et 28, et
- deux grandes faces verticales formant une face avant 29 du caisson et une face arrière 30 du caisson.

La face arrière 30 du caisson est couverte d'une plaque rectangulaire 31 évidée en son centre d'un rectangle de dimension inférieure à plaque verticale rectangulaire évidée en son centre. L'évidement est également de forme rectangulaire, comme visible sur la figure 6. La plaque rectangulaire évidée 31 forme par son évidement une entrée de flux d'air à température contrôlée 32. Cette entrée 32 présente ainsi une étendue horizontale permettant de distribuer un flux d'air à température contrôlé sur toute la longueur du caisson 24.

Préférentiellement, on prévoit, comme représenté sur les figures 2 à 7, un dispositif de répartition un flux d'air à température contrôlée en face de l'entrée de flux d'air à température contrôlée 32. Le dispositif de répartition comporte au moins deux déflecteurs 33 afin de défléchir le flux d'air à température contrôlée du centre du caisson 24 vers les parties latérales périphériques. Grâce à ces caractéristiques, l'organe de régulation de flux d'air 6 permet de répartir de façon sensiblement homogène le débit de flux d'air à température contrôlée sur chacune des sorties 42 de flux d'air à température contrôlée.

La liaison fluidique entre la sortie thermique 9 et l'organe de régulation de flux d'air 6 est réalisée en fixant la face arrière 30 du caisson 24 sur la sortie thermique 9 du dispositif de traitement thermique de l'air 4.

Comme déjà indiqué, l'invention n'est pas limitée au seul cas où le caisson 7 comprend le dispositif de traitement thermique de l'air 4. Au contraire, l'organe de régulation 6 selon la présente invention est tout à fait associable au caisson 7 permettant uniquement le recyclage de l'air issu du local 2 via la bouche 8.

Comme représenté sur les figures 2, 4 et 5, le caisson 24 présente en outre une cloison 34 le séparant ainsi en deux compartiments étanches entre eux:
- un compartiment 35 d'amené de flux d'air à température contrôlée, et
- un compartiment 36 d'amenée de flux d'air neuf.

La cloison 34 présente une forme générale de U, c'est-à-dire composée d'une plaque horizontale rectangulaire dont deux bords 37 et 38 opposés sont pliés de sorte à former deux plaques inclinées symétriquement par rapport à un plan vertical. Les deux plaques inclinées sont solidaires du plafond du caisson 24. La plaque verticale rectangulaire évidée ferme les parties extérieures du U et ne laisse ouvert par son évidement que l'intérieur du U.

L'intérieur du U forme ainsi le compartiment 35 d'amenée de flux d'air recyclé à température contrôlée tandis que l'extérieur du U forme le compartiment 36 d'amenée de flux d'air neuf, comme il est décrit ci-dessous plus en détail.

La face latérale 28 comporte un conduit 39 formant une entrée de flux d'air neuf. L'entrée de flux d'air neuf peut être reliée fluidiquement à la sortie d'air neuf 19 du dispositif de ventilation 5 par une gaine 50.

Le conduit 39 est agencé sur une plaque amoviblement fixée au caisson par l'intermédiaire de vis 400. Ainsi, la plaque amovible peut être alternativement disposée sur l'une ou l'autre des petites faces latérales 27 et 28, tandis que l'autre petite face latérale est équipée d'une autre plaque amovible ne présentant pas de conduit. Grâce à ces caractéristiques, le caisson 24 peut être fermé hermétiquement par la plaque amovible.

Grâce à ces caractéristiques, un opérateur peut choisir la configuration la plus simple en fonction de l'environnement, afin de connecter l'organe 6 au dispositif de ventilation 5 par la gaine 50 via le conduit 39.

En outre, la plaque inclinée de la cloison 34 étant agencée en face du conduit 39 permet, en fonctionnement, de défléchir l'air neuf dans le compartiment 36 d'amenée de flux d'air neuf.

La face avant 29 du caisson 24 présente la pluralité d'embouchures circulaires 20.

Comme représenté sur les figures 2 à 7, on voit que la plaque horizontale rectangulaire de la cloison 34 délimite chacune des embouchures 20 en deux portions, l'une supérieure 40 et l'autre inférieure 41. La portion supérieure 40 représente environ ¾ de la surface totale de l'embouchure 20.

La portion supérieure 40 forme une sortie de flux d'air à température contrôlée 42, qui est reliée fluidiquement, via l'intérieur du compartiment 35 d'amenée de flux d'air à température contrôlée, à l'entrée de flux d'air à température contrôlée 32.

La portion inférieure 41 forme une sortie de flux d'air neuf 43, qui est reliée fluidiquement, via l'intérieur du compartiment 36 d'amenée de flux d'air neuf, au conduit 39 formant l'entrée de flux d'air neuf.

Ainsi chaque embouchure 20 présente à la fois une sortie de flux d'air à température contrôlée 42 et une sortie d'air neuf 43, ce qui permet à l'organe de régulation de flux d'air 6 de délivrer dans chacune des zones 3 le mélange 23 de flux d'air comportant de l'air neuf et de l'air à température contrôlée.

Comme il ressort des figures 2 à 7, l'organe de régulation de flux d'air 6 comprend un dispositif de régulation du débit de flux d'air à température contrôlée, ainsi qu'un dispositif de régulation du débit de flux d'air neuf permettant notamment de contrôler les débits respectifs des flux d'air destiné à chacune des zones 3.

Pour chacune des embouchures 20, la sortie de flux d'air à température contrôlée 42 est équipée d'un volet 44 monté pivotant autour d'un axe sensiblement vertical 45 dans la portion supérieure 40. L'axe vertical 45 est sensiblement disposé au centre de la portion supérieure 40, de sorte à subdiviser la portion supérieure 40 en deux parties sensiblement symétriques, de sorte à former deux sections de passage sensiblement équivalentes.

Le volet est monté pivotant entre deux positions extrêmes : une position d'ouverture complète de la sortie de flux d'air à température contrôlée 42 et une position d'obturation complète de la sortie de flux d'air à température contrôlée 42. L'obturation complète est permise par la forme du volet 44. En effet, le volet 44 présente la même forme et même surface qu'une section de la portion supérieure 40.

Comme représenté sur les figures 4 et 5, l'organe de régulation de flux d'air 6 comporte un moteur pas-à-pas 46 pour chacun des volets 44 de sortie de flux d'air à température contrôlée, et permettant de contrôler la rotation de chaque volet 44 en réponse à une commande électronique.

Le boîtier de contrôle électronique de l'appareil thermodynamique peut être adapté pour envoyer les commandes électroniques de rotation de chaque volet 44 indépendamment des autres volets 44. Ainsi, le boîtier de contrôle électronique permet de contrôler le débit de flux d'air à température contrôlée à destination de chaque zone 3. Ce contrôle est effectué, pour une zone donnée, en fonction d'une température de consigne et d'une valeur de température de la zone 3 qui est relevée par le capteur de température 10 correspondant.

Le volet 44 présente ainsi une fonction de régulation du débit de flux d'air dans la sortie de flux d'air à température contrôlée 42, ce qui permet de réguler la température de chaque zone 3 indépendamment l'une de l'autre.

Comme visible sur les figures 2 à 7, pour chacune des embouchures 20, la sortie de flux d'air neuf 43 est équipée d'un volet 47 monté pivotant. Le volet 47 est monté pivotant autour d'un axe horizontal X. L'axe horizontal coïncide avec le bord supérieur de la portion inférieure 41. Le volet 47 est monté pivotant entre deux positions extrêmes : une position d'ouverture complète de la sortie de flux d'air neuf 43 et une position d'obturation complète de la sortie de flux d'air neuf 43. L'obturation complète peut être obtenue grâce à la forme du volet 47. En effet, le volet 47 présente une forme et une surface sensiblement similaires ou plus grande que la portion inférieure 41 ce qui permet de l'obturer. Le volet 47 présente ainsi une fonction de régulation du débit de flux d'air dans la sortie de flux d'air neuf 43.

Ainsi, le volet 44 de la sortie de flux d'air à température contrôlée et le volet 47 de la sortie de flux d'air neuf sont montés pivotants autour d'axes sécants perpendiculaires. Ainsi, l'organe 6 peut être réalisé de façon compacte, ce qui est particulièrement avantageux par exemple pour une installation dans un faux plafond.

Comme il ressort également des figures 4 et 5, chaque volet 47 de sortie de flux d'air neuf comporte une languette d'entraînement 48 apte à le faire pivoter. La languette d'entraînement 48 s'étend dans une direction perpendiculaire au plan du volet 47 de sortie de flux d'air neuf, à travers la face avant 29 du caisson 24. Pour cela, la face avant 29 du caisson comporte un orifice associé à chaque languette d'entrainement 48. Chaque orifice respectif est arrangé dans la direction d'extension de la languette respective 48, de sorte qu'une extrémité de chaque languette d'entrainement s'étende au moins partiellement à l'extérieur de l'organe de régulation de flux d'air 6. La languette d'entrainement 48 présente une forme de portion d'anneau et l'orifice est de même section que la languette d'entrainement 48. Grâce à cette caractéristique, l'orifice est sensiblement étanche à l'air.

Les languettes d'entrainement 48 sont indépendantes les unes des autres, afin que chacun des volets 47 de sortie de flux d'air neuf soit actionnable indépendamment l'un de l'autre.

Comme représenté sur les figures 3 et 7, l'extrémité 49 de la languette d'entrainement 48 forme un indicateur de réglage de la position du volet 47. L'extrémité 49 est en outre préhensible et peut ainsi être actionné manuellement depuis l'extérieur de l'organe de régulation de flux d'air 6.

On note que l'organe 6 permet de réguler la répartition de flux d'air neuf par zone 3 par simple action d'un opérateur, y compris après son installation. En effet, lorsqu'une gaine 21 est fixée sur l'embouchure 20, la languette d'entrainement 48 reste accessible sans avoir besoin de démonter la gaine 21. Ceci est tout particulièrement avantageux car l'opérateur peut ainsi régler l'inclinaison des volets 47 alors que les réseaux de gaine 21 ainsi que les bouches de soufflages 22 sont déjà installés. Les réglages des apports d'air neuf dans les zones 3 sont ainsi réglés en tenant compte des pertes de charge induites par les différents organes du réseau.

Grâce à certaines caractéristiques de l'invention, certains avantages peuvent être obtenus. Par exemple, parmi certains avantages possibles, cette invention peut présenter l'avantage de permettre de mutualiser un réseau de gaine déjà prévu pour le soufflage de l'air tempéré en y ajoutant de l'air neuf tout en permettant de régler la répartition de la quantité d'air neuf par gaine une fois l'installation des gaines terminée. Parmi d'autres avantages possibles, le volet 47 est maintenu dans la position de réglage définie avec la languette 48.

## Revendications

1. Organe de régulation de flux d'air (6) pour un système de ventilation, chauffage et/ou climatisation de plusieurs zones (3) d'un local (2), le système comprenant un dispositif (4) de traitement d'un flux d'air issu du local (2) configuré pour traiter thermiquement ledit flux d'air issu du local (2), le système comprenant en outre un dispositif de ventilation (5), l'organe (6) comportant un caisson (24) comprenant :
- une entrée (32) adaptée pour recevoir un flux d'air depuis le dispositif de traitement thermique, dite entrée d'air recyclé,
- une entrée (39) adaptée pour recevoir un flux d'air, dit neuf, depuis le dispositif de ventilation, dite entrée d'air neuf,
- une pluralité d'embouchures (20) adaptées pour être chacune connectée à une gaine (21) respective du système pour amener un flux d'air dans une zone respective du local,
chaque embouchure (20) comprenant :
- une première portion (40) reliée fluidiquement à l'entrée d'air recyclé (32) et formant une sortie de flux d'air dite à température contrôlée (42),
- une deuxième portion (41) reliée fluidiquement à l'entrée de flux d'air neuf et formant une sortie de flux d'air neuf,
l'organe (6) comportant en outre, pour chacune des embouchures (20),
- un premier dispositif de régulation du débit de flux d'air dans la sortie de flux d'air à température contrôlée, et
- un deuxième dispositif de régulation du débit de flux d'air dans la sortie de flux d'air neuf, le premier dispositif de régulation et le deuxième dispositif de régulation étant des volets montés pivotants autour d'axes de rotation sécants.

2. Organe selon la revendication 1, dans lequel le premier dispositif de régulation est un volet (44) monté pivotant entre une position d'ouverture complète de la sortie de flux d'air à température contrôlée (42) et une position d'obturation complète de la sortie de flux d'air à température contrôlée (42).

3. Organe selon l'une des revendications 1 ou 2, dans lequel le deuxième dispositif de régulation est un volet (47) monté pivotant entre une position d'ouverture complète de la sortie de flux d'air neuf (43) et une position d'obturation complète de la sortie de flux d'air neuf (43).

4. Organe selon la revendication 2 prise en combinaison avec la revendication 3, dans lequel le volet (44) de la sortie de flux d'air à température contrôlée et le volet (47) de la sortie de flux d'air neuf sont montés pivotants autour d'axes perpendiculaires.

5. Organe selon la revendication 4, dans lequel, dans une position de fonctionnement de l'organe (6) dans le système, l'axe de rotation du volet (44) de la sortie de flux d'air à température contrôlée est vertical et l'axe de rotation du volet (47) de la sortie de flux d'air neuf est horizontal.

6. Organe selon l'une quelconque des revendications 1 à 5, comportant, pour au moins l'une des embouchures (20), un membre de réglage du deuxième dispositif de régulation du débit de flux d'air dans la sortie d'air neuf, le membre de réglage étant actionnable depuis l'extérieur de l'organe.

7. Organe selon la revendication 3 ou l'une des revendications 4, 5 ou 6 dans leur dépendance à la revendication 3, comportant, pour au moins l'une des embouchures (20), une languette d'entrainement (48) du volet (47) de flux d'air neuf.

8. Organe selon l'une des revendications précédentes, comprenant un conduit (39) formant l'entrée de flux d'air neuf et agencé de façon amovible au caisson.

9. Organe selon l'une quelconque des revendications précédentes, comportant en outre un moyen de déflection (33) du flux d'air à température contrôlée agencé pour répartir de façon sensiblement homogène le débit de flux d'air à température contrôlée sur chacune des sorties (42).

10. Système de ventilation, chauffage et/ou climatisation de plusieurs zones d'un local, comportant :
- un organe (6) selon l'une quelconque des revendications précédentes,
- un dispositif (4) d'amenée d'air issu du local (2) connecté à l'entrée de flux d'air à température contrôlée (32) de l'organe de régulation (6), le dispositif étant de traitement thermique de flux d'air,
- un dispositif de ventilation de flux d'air neuf (5) connecté à l'entrée de flux d'air neuf de l'organe de régulation,
- une pluralité de gaines (21), les gaines étant connectées chacune par une première extrémité respective à une embouchure (20) respective de l'organe de régulation (6), les gaines étant en outre connectées par une seconde extrémité respective à une bouche de soufflage (22) respective disposée dans une zone respective du local.

## Patentansprüche

1. Luftstrom-Regulierelement (6) für ein System zur Belüftung, Heizung und/oder Klimatisierung mehrerer Bereiche (3) eines Raums (2), wobei das System eine Vorrichtung (4) zur Behandlung eines aus dem Raum (2) stammenden Luftstroms umfasst, die dazu ausgebildet ist, den aus dem Raum (2) stammenden Luftstrom thermisch zu behandeln, wobei das System ferner eine Belüftungsvorrichtung (5) umfasst, wobei das Element (6) ein Gehäuse (24) aufweist, das Folgendes umfasst:
- einen Einlass (32), der dazu ausgebildet ist, einen Luftstrom aus der Wärmebehandlungsvorrichtung aufzunehmen, der als Umluft-Einlass bezeichnet wird,
- einen Einlass (39), der dazu ausgebildet ist, einen als frisch bezeichneten Luftstrom von der Belüftungsvorrichtung zu empfangen, der als Frischlufteinlass bezeichnet wird,
- eine Vielzahl von Mündungen (20), die jeweils mit einem entsprechenden Kanal (21) des Systems verbunden werden können, um einen Luftstrom in einen entsprechenden Bereich des Raumes zu leiten,
wobei jede Mündung (20) umfasst:
- einen ersten Abschnitt (40), der mit dem Umlufteinlass (32) in Fluidkommunikation verbunden ist und einen temperaturkontrollierten Luftstromauslass (42) bildet,
- einen zweiten Abschnitt (41), der in Fluidkommunikation mit dem Frischluftstromeinlass verbunden ist und einen Frischluftstromauslass bildet, wobei das Element (6) ferner für jede der Mündungen (20) umfasst,
- eine erste Vorrichtung zum Regulieren des Luftstromflusses in den temperaturgesteuerten Luftstromauslass, und
- eine zweite Vorrichtung zur Regulierung des Luftstroms in den Auslass des Frischluftstroms,
wobei die erste Regulierungsvorrichtung und die zweite Regulierungsvorrichtung Klappen sind, die um getrennte Drehachsen schwenkbar angebracht sind.

2. Element nach Anspruch 1, wobei die erste Regulierungsvorrichtung eine Klappe (44) ist, die zwischen einer Position, in der der temperaturgesteuerte Luftstromauslass (42) vollständig geöffnet ist, und einer Position, in der der temperaturgesteuerte Luftstromauslass (42) vollständig geschlossen ist, schwenkbar angebracht ist.

3. Element nach einem der Ansprüche 1 oder 2, wobei die zweite Regulierungsvorrichtung eine Klappe (47) ist, die zwischen einer Position, in der der Frischluftstromauslass (43) vollständig geöffnet ist, und einer Position, in der der Frischluftstromauslass (43) vollständig geschlossen ist, schwenkbar angebracht ist.

4. Element nach Anspruch 2 in Verbindung mit Anspruch 3, wobei die Klappe (44) des temperaturgesteuerten Luftstromauslasses und die Klappe (47) des Frischluftstromauslasses um senkrechte Achsen schwenkbar angebracht sind.

5. Element nach Anspruch 4, wobei in einer Betriebsposition des Elements (6) im System die Drehachse der temperaturgeregelten Luftstromauslassklappe (44) vertikal und die Drehachse der Frischluftstromauslassklappe (47) horizontal ist.

6. Element nach einem der Ansprüche 1 bis 5, das für wenigstens eine der Mündungen (20) ein Einstellglied für die zweite Vorrichtung zur Regulierung des Luftstroms in den Frischluftauslass aufweist, wobei das Einstellglied von außerhalb des Elements betätigbar ist.

7. Element nach Anspruch 3 oder einem der Ansprüche 4, 5 oder 6 in ihrer Abhängigkeit von Anspruch 3, umfassend für wenigstens eine der Mündungen (20) eine Mitnehmerzunge (48) für die Frischluftstromklappe (47).

8. Element nach einem der vorhergehenden Ansprüche, umfassend einen Kanal (39), der den Frischluftstromeinlass bildet und lösbar mit dem Gehäuse verbunden ist.

9. Element nach einem der vorhergehenden Ansprüche, ferner umfassend eine Ablenkvorrichtung (33) für den temperaturgeregelten Luftstrom, die dazu angeordnet ist, den temperaturgeregelten Luftstromfluss im Wesentlichen gleichmäßig auf jeden der Auslässe (42) zu verteilen.

10. System zur Belüftung, Heizung und/oder Klimatisierung mehrerer Bereiche eines Raumes, umfassend:
- ein Element (6) nach einem der vorhergehenden Ansprüche,
- eine Vorrichtung (4) zum Zuführen von Luft aus dem Raum (2), die mit dem temperaturgeregelten Luftstromeinlass (32) des Regulierungselements (6) verbunden ist, wobei die Vorrichtung zur thermischen Behandlung des Luftstroms dient,
- eine Frischluftstrom-Belüftungsvorrichtung (5), die mit dem Frischluftstromeinlass des Regulierungselements verbunden ist,
- eine Vielzahl von Kanälen (21), wobei die Kanäle jeweils an einem ersten Ende mit einer entsprechenden Mündung (20) des Regulierungselements (6) verbunden sind, wobei die Kanäle ferner an einem zweiten Ende mit einer entsprechenden Ausblasöffnung (22) verbunden sind, die in einem entsprechenden Bereich des Raumes angeordnet ist.

## Claims

1. An air flow control member (6) for a ventilation, heating and/or air conditioning system for several areas (3) of a room (2), the system comprising a device (4) for treating a flow of air from the room (2) configured to thermally treat said flow of air from the room (2), the system further comprising a ventilation device (5), the member (6) including a box (24) comprising:
- an inlet (32) adapted to receive an air flow from the heat treatment device, called recycled air inlet,
- an inlet (39) adapted to receive an air flow, called fresh air flow, from the ventilation device, called fresh air inlet,
- a plurality of mouthpieces (20) each adapted to be connected to a respective sheath (21) of the system to bring an air flow into a respective area of the room,
each mouthpiece (20) comprising:
- a first portion (40) fluidically connected to the recycled air inlet (32) and forming an air flow outlet called temperature-controlled air flow outlet (42),
- a second portion (41) fluidically connected to the fresh air flow inlet and forming a fresh air flow outlet,
the member (6) further including, for each of the mouthpieces (20),
- a first device for controlling the air flowrate in the temperature-controlled air flow outlet, and
- a second device for controlling the air flowrate in the fresh air flow outlet,
the first control device and the second control device being flaps mounted to pivot around intersecting axes of rotation.

2. The member according to claim 1, wherein the first control device is a flap (44) mounted to pivot between a fully open position of the temperature-controlled air flow outlet (42) and a fully closed position of the temperature-controlled air flow outlet (42).

3. The member according to one of claims 1 or 2, wherein the second control device is a flap (47) mounted to pivot between a fully open position of the fresh air flow outlet (43) and a fully closed position of the fresh air flow outlet (43).

4. The member according to claim 2 as combined with claim 3, wherein the flap (44) of the temperature-controlled air flow outlet and the flap (47) of the fresh air flow outlet are mounted to pivot around perpendicular axes.

5. The member according to claim 4, wherein, in an operating position of the member (6) in the system, the axis of rotation of the flap (44) of the temperature-controlled air flow outlet is vertical and the axis of rotation of the flap (47) of the fresh air flow outlet is horizontal.

6. The member according to any one of claims 1 to 5, including, for at least one of the mouthpieces (20), an element for adjusting the second device for controlling the flowrate of air flow in the fresh air outlet, the adjustment element being operable from outside the member.

7. The member according to claim 3 or one of claims 4, 5 or 6 in their dependence on claim 3, including, for at least one of the mouthpieces (20), a drive tab (48) of the fresh air flow flap (47).

8. The member according to one of the preceding claims, comprising a duct (39) forming the fresh air flow inlet and removably arranged in the box.

9. The member according to any one of the preceding claims, further including a means (33) for deflecting the temperature-controlled air flow arranged to substantially homogeneously distribute the flowrate of temperature-controlled air flow on each of the outlets (42).

10. A ventilation, heating and/or air conditioning system for several areas of a room, including:
- a member (6) according to any one of the preceding claims,
- a device (4) for supplying air from the room (2) connected to the temperature-controlled air flow inlet (32) of the control member (6), the device being for air flow heat treatment,
- a fresh air flow ventilation device (5) connected to the fresh air flow inlet of the control member,
- a plurality of sheaths (21), the sheaths each being connected by a respective first end to a respective mouthpiece (20) of the control member (6), the sheaths being further connected by a respective second end to a respective blowing mouth (22) disposed in a respective area of the room.
